Europäisches Patentamt

European Patent Office

Office européen des brevets

(11) Veröffentlichungsnummer: **0 292 926**

**A2**

(12) **EUROPÄISCHE PATENTANMELDUNG**

(21) Anmeldenummer: 88108289.5

(22) Anmeldetag: 25.05.88

(51) Int. Cl.⁴: **H02P 5/16 , G05D 13/62**

(30) Priorität: 29.05.87 DE 3718207

(43) Veröffentlichungstag der Anmeldung:
30.11.88 Patentblatt 88/48

(84) Benannte Vertragsstaaten:
AT BE CH DE ES FR GB GR IT LI LU NL SE

(71) Anmelder: Deutsche Thomson-Brandt GmbH
Postfach 2060
D-7730 Villingen-Schwenningen(DE)

(72) Erfinder: Gleim, Günter, Dipl.-Ing.
Oberer Sonnenbühl 22
D-7730 Villingen 22(DE)
Erfinder: Uhde, Dietmar, Dipl.-Ing.
Weiherstrasse 11
D-7744 Königsfeld/Schwarzwald(DE)

(74) Vertreter: Körner, Peter, Dipl.-Ing.
Deutsche Thomson-Brandt GmbH Patent-
und Lizenzabteilung Göttinger Chaussee 76
D-3000 Hannover 91(DE)

(54) Verfahren zur Steuerung der Drehzahl eines Rotors.

(57)
2.1 Zur elektronischen Regelung von Antrieben werden Tachogeneratoren eingesetzt, mittels der die Drehzahl des Rotors ermittelt werden kann. Die Regelgenauigkeit bekannter Verfahren ist durch die mechanische Toleranz der Tachogeneratorelemente begrenzt.

2.2 Erfindungsgemäß wird zur Verbesserung der Regelungseigenschaften die Ist-Zeitdifferenz zwischen Festpunkten des Rotors während einer Umdrehung gemessen, wobei Impulse eines Impulsgebers ausgewertet werden. Danach wird die Folge der die Ist-Zeitdifferenz ausmachenden Pulse mit einer Soll-Zeitdifferenz verglichen und aus diesem Vergleich ein Signal zur Steuerung des antreibenden Motors abgeleitet.

2.3 Die Erfindung ist für Motoren anwendbar, bei denen es neben einer genauen Einhaltung der Soll-Geschwindigkeit auch auf eine genaue Folge des Motors auf Beschleunigungs- und Bremsvorgänge ankommt. Anwendungsfälle sind Motore für digitale oder analoge Signalaufzeichnungsgeräte.

## Verfahren zur Steuerung der Drehzahl eines Rotors

Bei elektronisch geregelten Antrieben ist bekannt, zwischen der angetriebenen Welle (Rotor) und einem Festpunkt Impulse zu erzeugen, deren zeitliche Folge eine Aussage über die jeweilige Umdrehungsgeschwindigkeit der Welle bzw. des Rotors abgeben. Die so erzeugte Impulsfolgefrequenz wird in elektronische Auswerteschaltungen eingegeben, von denen im Vergleich z.B. mit einer Sollfrequenz eine Spannung zur Nachsteuerung der Motordrehzahl abgeleitet wird.

Die Impulserzeugung geschieht mittels sogenannter Tachogeneratoren, wobei die Art der Erzeugung recht unterschiedlich sein kann. So werden z.B. mechanische, elektromagnetische oder optoelektronische Tachogeneratoren eingesetzt. Allen Generatoren mit mehr als einer Impulsauswertung pro Umdrehung ist gemeinsam, daß, bedingt durch die mechanische Anordnung der einzelnen Generatorelemente, während einer Rotorumdrehung Toleranzen vorhanden sind, wodurch die abgegebene Impulsfolgefrequenz während einer Umdrehung trotz gleichmäßiger Umdrehungsgeschwindigkeit nicht konstant ist.
Wenn von einem derartigen toleranzbehafteten Generator z.B. eine PLL mit geringen internen Zeitkonstanten angesteuert wird, gibt das Ausgangssignal der PLL während einer Umdrehung diese Toleranzen wieder, obwohl bei konstanter Umdrehungsgeschwindigkeit auch das Ausgangssignal konstant sein müßte. Dadurch können unerwünschte Regelvorgänge während einer Umdrehung des Rotors ausgelöst werden.

Es ist Aufgabe der Erfindung, auch bei derartigen toleranzbehafteten Tachogeneratoren unerwünschte Regelvorgänge zu vermeiden .

Diese Aufgabe wird gemäß der Erfindung durch die im Anspruch 1 aufgeführten Merkmale gelöst. Weiterbildungen der Erfindung sind in den Unteransprüchen gekennzeichnet.

Im Prinzip wird die Zeitdifferenz jeweils zweier Impulse von dem gleichen Generatorelement des Tachogenerators für die Auswertung ausgenutzt, wobei die Impulse aufeinanderfolgender Umdrehungen oder auch z.B. jeder dritten Umdrehung ausgewertet werden können. Für jedes auszuwertende Generatorelement sind z.B. zwei Speicher vorhanden, in die abwechselnd nacheinander die erzeugten Impulse eingegeben werden, so daß die Zeitdifferenz der Impulse dieses Generatorelementes während der Rotorumdrehungen ermittelt werden kann. Dieses geschieht in einer Auswerteschaltung, die mit den Ausgängen der Speicher verbunden ist. Sind die Zeitdifferenzen aller Impulse der auszuwertenden Generatorelemente gleich, ist auch die Umdrehungsgeschwindigkeit konstant.

Die so ermittelten Istzeitdifferenzen aller auszuwertenden Tachoelemente werden nacheinander ausgelesen und in einer Auswerteschaltung, z.B. einer PLL mit einer Sollzeitdifferenzfolge verglichen. Aus diesem Vergleich wird dann ein Signal erzeugt, welches zur Nachsteuerung der Motordrehzahl dient.

Um zu erkennen, welcher Impuls des Tachogenerators in den jeweils "zuständigen" Speicher einzugeben ist, kann durch eine Kennung z.B. am Rotor ein Impuls festgelegt werden. Durch Auswertung dieser Kennung ist es möglich, z.B. mittels Zählschaltungen die Zuordnung der einzelnen Impulse zu den entsprechenden Speichern festzulegen. Mit den Zählschaltungen läßt sich nach abgeschlossener Zeitdifferenzmessung der zuerst eingegebene Speicher zurücksetzen und neu belegen oder überschreiben.

Es ist auch möglich, mit nur einem Speicher eine Zeitdifferenzmessung durchzuführen. Der erste Wert wird abgespeichert. Der zweite Wert wird mit dem ersten abgespeicherten Wert verglichen, und anschließend wird der zweite Wert in den Speicher eingelesen in welchem vor dem Vergleich der erste Wert gespeichert war.

Die Erfindung wird in einem Beispiel anhand der Zeichnung näher erläutert.

Fig. 1 zeigt einen elektronisch kommutierten Motor in Kombination mit einer Kopftrommelanordnung für ein Magnetbandgerät.

Figur 2 zeigt ein Blockschaltbild für die Motorsteuerung eines elektronisch kommutierten Gleichstrommotors.

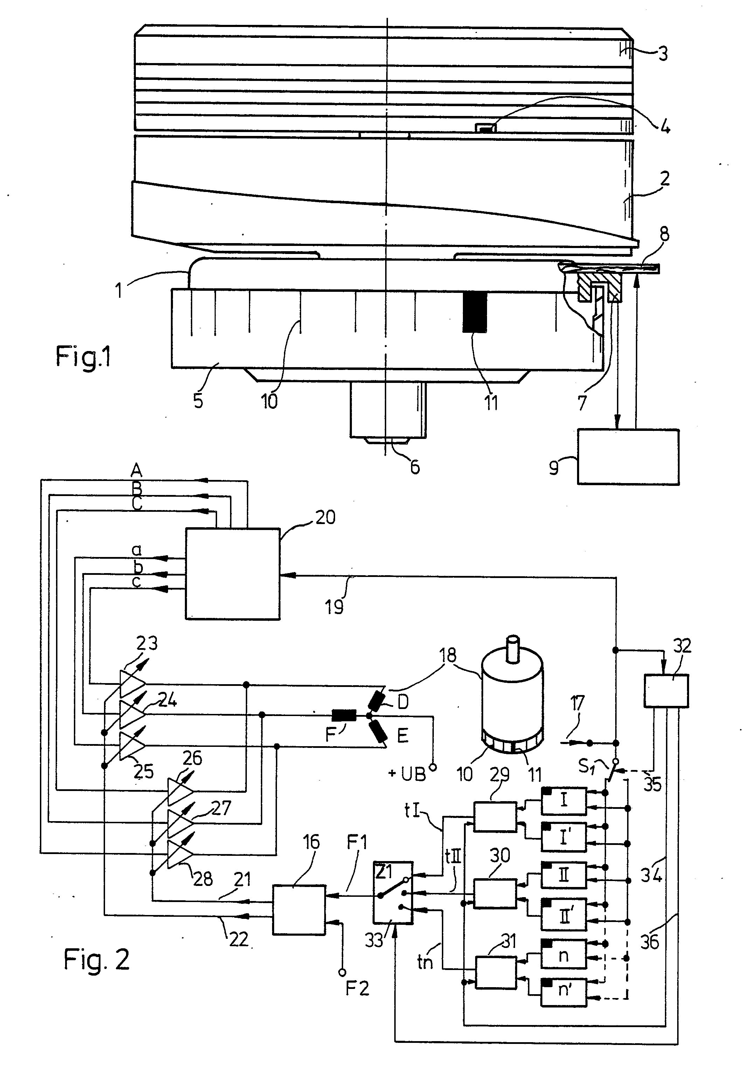

Fig. 1 zeigt einen elektronisch kommutierten Motor in Kombination mit einer Kopftrommelanordnung für ein Magnetbandgerät. Der Motor besteht aus einem Stator 1, in welchem kommutierbare Spulen kreisförmig angeordnet sind. Im Rotor 5 sind Magnete auf einer Kreisbahn angeordnet, die den Spulen im Stator mit einem Luftspalt als Abstand gegenüberstehen. Der Rotor 5 ist mit der oberen rotierenden Kopftrommel 3 auf einer gemeinsamen Welle 6 befestigt, während die untere stationäre Kopftrommel 2 mit dem Stator 1 fest verbunden ist. Der Rotor trägt auf seinem äußeren Umfang Strichmarkierungen 10,11, unterschiedlicher Breite. Der Rand des äußeren Rotorteiles, welches aus lichtdurchlässigem Kunststoff besteht, taucht in den Spalt einer Gabellichtschranke 7 ein, in der bei rotierendem Motor durch die Strichmarkierungen Impulse erzeugt werden, aus deren Folge eine Steuerung des Motors durch die Motorsteuerschaltung 9 abgeleitet wird. Die Gabellichtschranke 7 ist auf einer Leiterplatte 8 befestigt, welche aus dem Statorteil 1 des Motors herausragt, wobei die Gabellichtschranke in einer festen Zuordnung zu den im Stator 1 befindlichen kommutierbaren Spulen angeordnet ist.

Die Strichmarkierungen sind mit konstantem Winkelabstand in einer bestimmten Zuordnung zu den im Rotor befindlichen Magneten angeordnet. Sie können z.B. auf ein Polübergangsminimum der Rotormagnete ausgerichtet sein. Um den Anfang einer Umdrehung mit Hilfe der Stichmarkierungen 10,11, zu kennzeichnen, ist die Strichtmarkierung 11 unterschiedlich zu den anderen gleichartigen Strichmarkierungen 10 ausgeführt. Bei der dargestellten Anordnung ist diese Markierung 11 außerdem zu den in der oberen Kopftrommel 3 befindlichen Magnetköpfen 4 in einer festgelegten Zuordnung ausgerichtet.

Fig. 2 zeigt ein Blockschaltbild für die Motorsteuerung eines elektronisch kommutierten Gleichstrommotors. Motor 18 ist dreisträngig mit den Strängen D,E und F aufgebaut. Die einzelnen Stränge sind in Sternschaltung angeordnet. Der Sternmittelpunkt ist mit der Betriebsspannung +UB verbunden. Mit Motor 18 ist ein Sensor 17 gekoppelt, der als Optokoppler arbeitet und einen Strichcode 10, 11 auswertet, der am Rotorumfang angebracht ist. Sensor 17 gibt Signale über Leitung 19 an einen Umsetzer 20 ab, welche innerhalb des Umsetzers z.B. mit Hilfe eines Microprozessors ausgewertet werden. Es wird die jeweilige Winkellage des Rotors erkannt und eine Schaltspannung auf den Ausgangsleitungen a,b,c und A,B,C ausgegeben, durch welche über steuerbare Verstärker 23 - 28 der jeweilige Spulenstrang von Motor 18 angeschaltet wird. Die Informationen für die Phasenlage der Kommutierung steht während der gesamten Betriebszeit auf den Leitungen a,b,c und A,B,C an. Dabei sind z.B. die Ausgangsleitungen a,b,c für eine Kommutierung in Bremsrichtung und die Leitungen A,B und C für eine Kommutierung in Beschleunigungsrichtung vorgesehen.

Die tatsächliche Kommutierungsrichtung und die Intensität der Kommutierung wird durch steuerbare Verstärker 23 - 28 vorgegeben, die als Stellglieder zwischen den Ausgangsleitungen von Umsetzer 20 und den Spulenanschlüssen von Motor 18 geschaltet sind. So sind die Ausgangsleitungen für Bremsrichtung a,b,c mit den Eingängen der Verstärker 23,24 und 25 und die Ausgangsleitungen für Beschleunigungsrichtung A,B und C mit den Eingängen der Verstärker 26,27 und 28 verbunden.

Die Verstärker 23,24 und 25 bilden eine Gruppe, deren parallelgeschaltete Steuereingänge mit einer PLL-Schaltung 16 über Leitung 22 verbunden sind, während die Gruppe der Verstärker 26,27 und 28 mit ihren ebenfalls parallelgeschalteten Steuereingängen über Leitung 21 an die PLL-Schaltung 16 angeschaltet sind. Die Ausgänge der Verstärker 23 und 26 speisen Strang D, die der Verstärker 24 und 27 Strang F und die der Verstärker 25 und 28 Strang E von Motor 18.

Über die Steuerleitungen 21 bzw. 22 werden die Verstärkergruppen 23 - 25, bzw. 26 - 28 aktiviert, d.h. daß an den Verstärkereingängen anstehende Kommutierungssignal von Umsetzer 20 wird in Abhängigkeit der Steuersignale auf den Leitungen 21 bzw. 22 an die Spulenstränge von Motor 18 "durchgeschaltet". Dabei ist die Größe des Kommutierungsstromes abhängig vom Innenwiderstand des "durchgeschalteten" Verstärkers, also abhängig von der Größe der auf den Steuerleitungen 21 bzw. 22 anstehenden Spannung. Diese Spannung bzw. Spannungen werden in der PLL-Schaltung 16 generiert. Ihre Größe und auch die Auswahl der jeweils mit Spannung beaufschlagten Leitung 21 oder 22 ergibt sich aus dem Vergleich einer von der Motordrehzahl abgeleiteten Istzeitdifferenzfolge F1 mit einer Sollzeitdifferenzfolge F2.

Durch Auswertung eines Strichcodes am Rotorumfang mittels Sensor 17 wird eine Tachofrequenz erzeugt, aus der bei jeder zweiten oder weiteren Umdrehung die Folge von Istzeitdifferenzen F1 abgeleitet wird. Bei Nenndrehzahl entspricht F1 der Sollzeitdifferenzfolge F2.

Solange F1 größer als F2 ist, wird von der PLL-Schaltung 16 auf der Leitung 21 eine Spannung zur Steuerung der Regelverstärkergruppe 26 - 28 ausgegeben, die für die Kommutierung in Beschleunigungsrichtung zuständig ist. Wird dagegen z.B. durch Lastminderung eine Drehzahl erreicht, bei der der Sensor 17 eine höhere Frequenz abgibt, wird ein Signal an Leitung 21 angelegt und der Motor gebremst.

Die Größe der jeweiligen Verstärkungssteuerung wird also aus dem anstehenden Istwert im Vergleich zu einem Sollwert in der Schaltung 16 abgeleitet.

Zur Ermittlung der Istwerte werden erfindungsgemäß die von Sensor 17 generierten Impulse in das einem Impuls innerhalb einer Impulsfolge zugeordnete Speicherpaar I,I',II,II',.... n,n' nacheinander, mit den Rotorumdrehungen alternierend, eingegeben.

So wird bei einer ersten Umdrehung in Speicher I der erste erzeugte Impuls eingegeben. Dieses kann z.B. bei einem Motor nach Figur 1 der durch die breite Markierung 11 erzeugte Impuls sein. In Speicher II wird der nächste Impuls und in Speicher n der letzte Impuls eingegeben. Bei der nächsten oder einer darauf folgenden Umdrehung wiederholt sich dieser Vorgang, jedoch werden jetzt die Impulse in die zugeordneten Speicher I', II' bis n' eingegeben. Auf diese Weise wird also von jeweils einem Tachoelement eine Zeit oder Meßzeit abgespeichert. Die Zuordnung der Impulse nach Ablauf jeweils einer oder mehrerer Umdrehungen des Rotors erfolgt mittels Schalter $S_1$, der von einem Taktgenerator 32 über Leitung 35 gesteuert wird.

Jeweils die Ausgänge eines Speicherpaares $I,I',II,II'$.....$n,n'$ sind mit einer Schaltung 29,30.... 31 verbunden, in der die Meßzeiten zweier durch die gleiche Markierung erzeugten Impulse tI,tII.....tn verglichen werden.

Nach erfolgter Differenzermittlung werden nacheinander, gesteuert von Schalter S1 in zeitlicher Folge die Speicher mit den bei der ersten Umdrehung eingegebenen Impulsen zurückgesetzt oder später überschrieben, so daß jetzt in diese Speicher, nämlich I bis n die nächsten auszuwertenden Impulse eingegeben werden können. Dieser Vorgang wiederholt sich alternierend, so daß immer die durch die letzten Umdrehungen erzeugten Meßzeiten eines Speicherpaares ausgewertet werden können.

Die Ausgänge der Schaltungen 29 bis 31 sind mit dem Eingang einer Multiplex-Schaltung 33 verbunden. Gesteuert über Leitung 34 von Taktgenerator 32, der seinerseits die Taktinformation von Sensor 17 umsetzt, werden die ermittelten Meßzeiten tI bis tn der Schaltungen 29 bis 31 sequentiell der Multiplex-Schaltung 33 zugeführt, die über eine Leitung 36 ebenfalls vom Taktgenerator 32 angesteuert wird. Am Ausgang der Multiplex-Schaltung steht die ermittelte Istzeitdifferenzfolge F1 an, die in der PLL-Schaltung 16 mit der Sollzeitdifferenzfolge F2 verglichen wird. Aus diesem Vergleich wird ein Signal erzeugt, welches eine Motorsteuerung über die Leitungen 21 oder 22 bewirkt, ohne daß mechanische Tachotoleranzen, z.B. durch ungenaue Markierungsverteilung am Rotorumfang, wirksam werden.

Es ist auch möglich, die Schaltungen 16,29,30,31,32,33, Schalter S1 und die Speicher I bis n in Form einer integrierten Schaltung als Microprozessor auszuführen. In einer derartigen Schaltung können auch die Istzeitdifferenzen benachbarter Impulsgeber für eine Motorsteuerung ausgewertet werden.

## Ansprüche

1. Verfahren zur Steuerung der Drehzahl eines Rotors durch Auswertung von Impulsen, die zwischen Festpunkten und Punkten des Rotors während einer Umdrehung durch n-Impulsgeber erzeugt werden, **dadurch gekennzeichnet, daß** jeweils die Istzeitdifferenz der Impulse eines Impulsgebers nach Vollendung einer oder mehrerer Umdrehungen ermittelt wird, daß die Istzeitdifferenzfolge (F1) der Impulse aller auszuwertenden Impulsgeber mit einer Sollzeitdifferenzfolge (F2) verglichen wird, und daß aus diesem Vergleich ein Signal zur Steuerung des antreibenden Motors abgeleitet wird.

2. Verfahren nach Anspruch 1, **dadurch gekennzeichnet, daß** zusätzlich die Werte der Istzeitdifferenzen benachbarter Impulsgeber das Signal zur Steuerung des Motors beeinflussen.

3. Verfahren nach Anspruch 1, **dadurch gekennzeichnet, daß** die Sollzeitdifferenzfolge (F2) einem Wert für die Nenndrehzahl des Rotors entspricht.

4. Verfahren nach einem der Ansprüche 1 - 3, **dadurch gekennzeichnet, daß** der Rotor ein Rotorteil eines direkt angetriebenen Motors ist.

5. Schaltung zur Durchführung des Verfahrens nach einem der Ansprüche 1 - 4, **dadurch gekennzeichnet, daß** für die Ermittlung der Istzeitdifferenz der Impulse eines Impulsgebers ein Speicher vorgesehen ist, in den alternierend mit den Umdrehungen diese Impulse eingegeben werden, das jeweils der Speicher mit einer Auswerteschaltung verbunden ist, in der die Istzeitdifferenz zweier Impulse ermittelt und mit einer Sollzeitdifferenz verglichen wird.

6. Schaltung zur Durchführung des Verfahrens nach einem der Ansprüche 1 - 4, **dadurch gekennzeichnet, daß** für die Ermittlung der Istzeitdifferenz der Impulse eines Impulsgebers mehrere Speicher vorgesehen sind, in die alternierend mit den Umdrehungen die Impulse eingegeben werden, das jeweils diese Speicher mit einer Auswerteschaltung verbunden sind, in der die Istzeitdifferenz zweier Impulse ermittelt und mit einer Sollzeitdifferenz verglichen wird.6.

7. Schaltung nach Anspruch 5, **dadurch gekennzeichnet,daß** Speicher- und Auswerteschaltungen Teil eines Mikroprozessors sind.

Fig.1

Fig. 2